# FASCICULE DE BREVET EUROPEEN

(11) **EP 2 622 833 B1**
(45) Date de publication et mention de la délivrance du brevet: **10.08.2016**
(21) Numéro de dépôt: 11773793.2
(22) Date de dépôt: 27.09.2011
(51) Int. Cl.: H04M 3/46, H04M 3/42, H04M 3/533

(54) **PROCEDE PERMETTANT UN ECHANGE D'INFORMATIONS DE CONTEXTE AU SEIN D'UN GROUPE D'UTILISATEURS PARTAGEANT UN MEME IDENTIFIANT**
VERFAHREN ZUR ERMÖGLICHUNG DES AUSTAUSCHES VON KONTEXTINFORMATIONEN INNERHALB EINER BENUTZERGRUPPE MIT EIN- UND DEMSELBEN IDENTIFIKATOR
METHOD ALLOWING AN EXCHANGE OF CONTEXT INFORMATION WITHIN A GROUP OF USERS SHARING ONE AND THE SAME IDENTIFIER

(30) Priorité: 28.09.2010 FR 1057820
(43) Date de publication de la demande: 07.08.2013
(73) Titulaire: Orange, 75015 Paris (FR)
(72) Inventeur: LE HUEROU, Emmanuel, F-22700 Saint Quay Perros (FR); BEAUFILS, Eric, F-22450 Langoat (FR)
(74) Mandataire: Vidon Brevets & Stratégie
(86) Numéro de dépôt international: PCT/FR2011/052251
(87) Numéro de publication internationale: WO 2012/042165

(56) Documents cités:
- WO-A1-2007/148037
- US-A1- 2005 238 157

## Description

### 1. Domaine de l'invention

L'invention concerne un procédé de transmission d'informations entre au moins un premier et un deuxième terminal associés à un identifiant commun.

De tels procédés sont couramment utilisés dans le domaine des communications interpersonnelles, en particulier les communications téléphoniques.

### 2. Art antérieur

L'état actuel de la technique permet de connecter une pluralité de terminaux à une même ligne téléphonique dont une terminaison est localisée au sein d'un domicile familial. Dans une telle situation, un occupant du domicile peut se faire une idée assez précise de la disponibilité des autres occupants en observant les activités de ceux qui sont dans son champ de vision et en écoutant et/ou en interrogeant verbalement ceux qui lui sont invisibles. Il saura ainsi quels occupants sont disponibles pour une conversation ou pour exercer une quelconque autre activité commune, comme visionner ensemble un programme audiovisuel ou jouer ensemble à un jeu vidéo.

Or il existe aujourd'hui dans le domaine des télécommunications un engouement de plus en plus prononcé pour le partage d'expériences en communauté, qui a conduit certains opérateurs de télécommunication à proposer des services mono-numéros grâce auxquels une communauté d'utilisateurs munis chacun d'un terminal portable est identifiée au moyen d'un unique numéro de téléphone, qui est alors commun à tous les utilisateurs de la communauté. Dans ce type de situation, les différents membres de la communauté sont le plus souvent situés à plusieurs kilomètres, voire plusieurs dizaines ou centaines de kilomètres les uns des autres et sont donc dans l'incapacité non seulement de se voir les uns les autres, mais également d'échanger verbalement entre eux des informations relatives à leur activité et à leur disponibilité, de sorte que les différents membres de la communauté ne disposent pas dans les services mono-numéros actuels d'informations d'état et de disponibilité des autres membres de la communauté, ce qui limite l'intérêt et freine donc le développement de ce type de service.

En outre, lorsqu'une communication est présentée aux membres d'une communauté partageant un même identifiant, chacun desdits membres doit déterminer s'il doit ou non accepter l'établissement de la communication ainsi présentée, ou laisser au contraire un autre membre prendre en charge cette communication, ce qui peut conduire en définitive à une situation sous-optimale dans laquelle un membre de la communauté décroche avant que ne puisse le faire un autre membre qui est pourtant le véritable destinataire de la communication. Il peut même se produire qu'aucun des membres de la communauté ne décroche, chacun pensant que l'un des autres membres est mieux placé pour le faire, de sorte qu'en définitive, aucune communication ne sera établie.

La demande de brevet US 2005/238157 décrit un procédé de transmission d'informations au sein d'une pluralité de terminaux associés à un identifiant commun, lequel procédé permet à un utilisateur de l'un desdits terminaux de faire savoir aux utilisateurs des autres terminaux associés au même identifiant qu'il ne souhaite pas répondre lui-même à une communication.

### 3. Objectifs de l'invention

L'invention apporte une amélioration par rapport à l'état de la technique, en proposant un procédé qui permet à des membres d'une communauté d'utilisateurs identifiée au moyen d'un unique numéro de téléphone de disposer d'informations de contexte relatives aux autres membres de la communauté à tout moment, et en particulier au moment précis où une demande d'établissement d'une communication leur est présentée, afin que ces utilisateurs puissent, d'une part, savoir qui est disponible pour une conversation ou pour exercer une quelconque autre activité commune, et d'autre part, ne pas être livrés à eux-mêmes pour choisir s'ils doivent ou non accepter une mise en communication.

En particulier, l'invention vise à permettre à l'un des membres de la communauté de signifier à un autre membre de la communauté qu'il considère que cet autre membre devrait accepter de prendre une communication en cours de présentation.

### 4. Exposé de l'invention

En effet, selon un aspect fonctionnel, l'invention concerne un procédé de transmission d'informations entre des terminaux parmi une pluralité de terminaux associés à un identifiant commun conforme à la revendication 1.

Les notifications d'état pourront être échangées directement entre les différents terminaux associés au même identifiant commun, chaque terminal émettant une nouvelle notification d'état dès que se produit un changement de son statut ou de son contexte, par exemple s'il subit un déplacement, s'il entre en communication avec un tiers, s'il se trouve placé en mode veille ou au contraire réactivé, etc.

Alternativement, les notifications d'état pourront être gérées de façon centralisée par un serveur de gestion, qui pourra alors tenir à jour une table des états des différents membres de la communauté. Dans un tel mode de mis en oeuvre, un procédé tel que décrit ci-dessus inclut en outre une étape de réception de ladite notification par un serveur de gestion, et une étape de retransmission de ladite notification vers au moins le deuxième terminal.

Selon une variante particulièrement avantageuse de l'invention, le procédé décrit ci-dessus inclut en outre une étape de présentation d'une communication auxdits premier et deuxième terminaux, et une étape d'émission par le premier terminal d'une notification de choix destinée au moins au deuxième terminal et porteuse d'une information relative à la communication présentée.

Grâce à cette variante de l'invention, les différents utilisateurs des terminaux associés à un même identifiant commun peuvent échanger entre eux des informations afin de déterminer quelle est la meilleure suite à donner à la présentation de la communication. Un utilisateur pourra par exemple faire savoir aux autres qu'il est trop occupé pour prendre la communication, tandis qu'un autre pourra déclarer ne pas vouloir parler à l'appelant identifié sur l'écran de son terminal alors qu'encore un autre utilisateur pourra faire savoir aux autres qu'il souhaite au contraire absolument prendre la communication, auquel cas les autres utilisateurs ainsi informés le laisseront réaliser l'établissement de la communication.

Selon un mode de mise en oeuvre particulier de l'invention, l'étape de présentation de la communication inclut une présentation d'une durée à l'issue de laquelle ladite communication sera transférée à un service de messagerie.

Ce mode de mise en oeuvre est avantageux en ce qu'il augmente les chances pour qu'une communication présentée à un groupe d'utilisateurs associés à un même identifiant soit effectivement établie. En effet, il est bien connu, y compris des utilisateurs eux-mêmes, que la probabilité pour qu'un appelant mette fin à une tentative d'entrée en communication augmente de manière très significative dès lors que la communication est réorientée vers un service de messagerie, car la plupart des appelants renoncent généralement à laisser un message et raccrochent dès qu'ils entendent un message d'accueil de boîte vocale.

Ainsi, la présentation de la durée à l'issue de laquelle la communication sera transférée à la messagerie joue le rôle d'un compte à rebours qui incite les utilisateurs auxquels la communication est présentée à accepter l'établissement de cette communication sous peine qu'elle ne soit perdue. Ceci présente pour avantage de diminuer de façon générale les risques de perte d'informations utiles aux utilisateurs et les pertes de revenus qu'encourent les opérateurs en cas de non-aboutissement de communications.

Selon un autre mode de mise en oeuvre de l'invention, qui pourra être déployé alternativement ou cumulativement avec le précédent, un procédé tel que décrit plus haut inclut en outre une étape de détection d'une désignation, par un utilisateur d'un terminal sur lequel la communication est présentée, d'un utilisateur d'un autre terminal, ladite notification de choix incluant alors une commande destinée à provoquer la production, par le terminal de l'utilisateur désigné, d'un stimulus prédéterminé.

Selon un aspect matériel, l'invention concerne également un système de télécommunication incluant au moins un premier et un deuxième terminal associés à un identifiant commun, caractérisé en ce qu'au moins le premier terminal inclut des moyens d'émission d'une notification d'état destinée au moins au deuxième terminal et porteuse d'une information relative au contexte dans lequel se trouve un utilisateur dudit premier terminal.

Selon un autre aspect matériel, l'invention concerne également un terminal de communication associé à un identifiant commun à au moins un deuxième terminal, caractérisé en ce qu'il inclut des moyens d'émission d'une notification d'état destinée au moins audit deuxième terminal et porteuse d'une information relative au contexte dans lequel se trouve un utilisateur dudit premier terminal.

Selon encore un autre aspect matériel, l'invention concerne également un programme d'ordinateur caractérisé en ce qu'il comprend des instructions de code de programme pour la mise en oeuvre du procédé tel que décrit plus haut lorsque ce programme est exécuté par un processeur.

### 5. Liste des figures

D'autres caractéristiques et avantages de l'invention apparaîtront plus clairement à la lecture de la description suivante de modes de réalisation particuliers, donnés à titre de simples exemples illustratifs et non-limitatifs, et des dessins annexés dans lesquels :
- la **FIG.1** est un diagramme fonctionnel qui représente un système de communication dans lequel l'invention est mise en oeuvre, et
- la **FIG.2** est un diagramme fonctionnel qui représente schématiquement un terminal inclus dans un tel système de communication.

### 6. Description d'un mode de réalisation de l'invention

### 6.1 Principe général

Le principe général de l'invention repose sur un échange, entre terminaux associés à un même identifiant, de notifications d'état porteuses d'informations relatives au contexte dans lequel se trouvent les utilisateurs des terminaux, permettant aux utilisateurs de savoir qui est disponible pour une conversation ou pour exercer une quelconque autre activité commune.

En particulier, lorsqu'une présentation d'une communication est faite aux terminaux, l'invention prévoit un échange entre les terminaux de notifications de choix porteuses d'une information relative à la communication présentée, permettant aux utilisateurs de ne pas être livrés à eux-mêmes pour choisir s'ils doivent ou non accepter une mise en communication.

### 6.2 Description d'un mode de réalisation

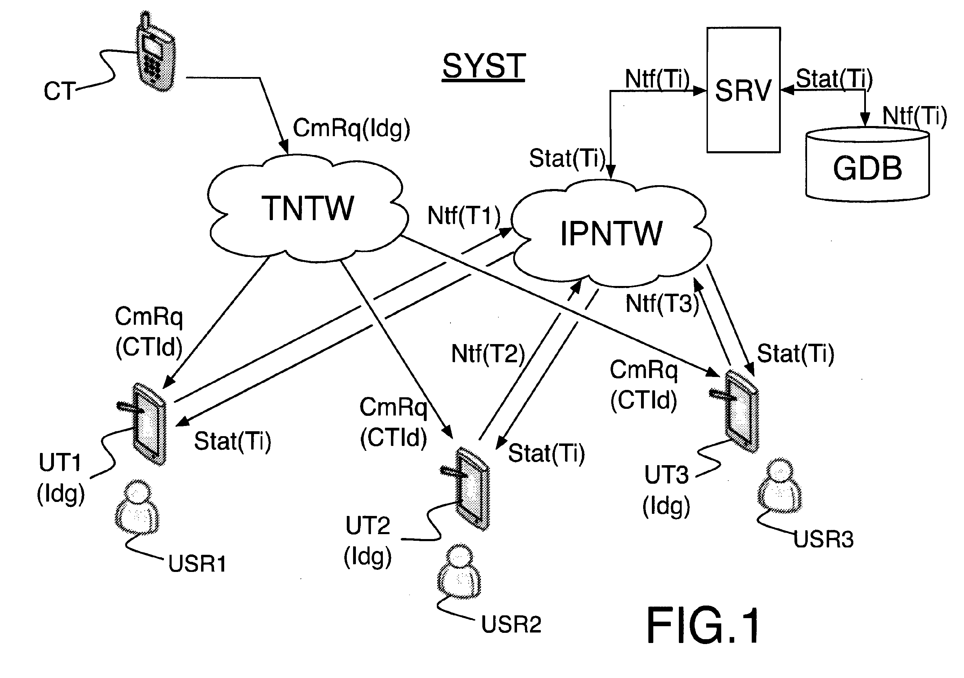

La **FIG.1** illustre un mode de mise en oeuvre de l'invention au sein d'un système de télécommunication SYST, qui inclut un premier, un deuxième terminal et un troisième terminal UT1, UT2 et UT3 associés à un même identifiant de groupe Idg, par exemple un numéro de téléphone commun à ces trois terminaux, chacun desdits terminaux UTi (pour i=1 à 3 dans cet exemple particulier) incluant des moyens d'émission de notifications d'état Ntf(Ti) (pour i=1 à 3) destinées aux autres terminaux UTj (pour i ≠ j) et porteuses d'informations relatives au contexte dans lequel se trouve un utilisateur USRi dudit terminal UTi (pour i=1 à 3).

Le système SYST conforme à l'invention fonctionne comme suit : chaque terminal UTi (pour i=1 à 3) émet une nouvelle notification d'état Ntf(Ti) dès que se produit un changement de son statut ou de son contexte, par exemple s'il subit un déplacement, s'il entre en communication avec un tiers, s'il se trouve placé en mode veille ou au contraire réactivé, etc.

Dans le mode de mise en oeuvre représenté ici, les notifications d'état Ntf(Ti) sont transmises *via* un réseau de transfert de données IPNTW, par exemple un réseau conforme au protocole Internet, à un serveur de gestion de notifications SRV, qui a vocation a assurer une gestion centralisée des informations d'état émanant des terminaux UTi (pour i=1 à 3). A cet effet, le serveur de gestion de notifications SRV dispose d'une base de données d'états GDB dans laquelle est mise à jour une table des états des différents terminaux UTi (pour i=1 à 3) sur la base des informations d'état contenues dans les notifications d'état Ntf(Ti).

A chaque mise à jour de cette table consécutivement à la réception d'une nouvelle notification d'état, une notification de statut Stat(Ti) descriptive des états des différents terminaux UTi (pour i=1 à 3) est générée par la base de données GDB et répercutée auxdits terminaux UTi par le serveur de gestion de notifications SRV *via* le réseau de transfert de données IPNTW.

Chaque terminal UTi (pour i=1 à 3) peut ainsi restituer quasiment en temps réel à son utilisateur USRi des informations d'état valides concernant chacun des utilisateurs des autres terminaux Tj (pour i ≠ j) qui partagent son identifiant Idg.

Lorsqu'un terminal tiers CT émet une requête de mise en communication CmRq(Idg) destinée à l'identifiant de groupe Idg, cette requête de mise en communication est transmise, *via* un réseau téléphonique TNTW qui pourra dans certains cas être intégré dans le réseau de transfert de données IPNTW, aux terminaux UTi (pour i=1 à 3) sous la forme d'un signal de présentation d'appel CmRq(CTid) indiquant l'identifiant CTId du terminal tiers CT appelant.

Sur la base de l'identifiant du terminal appelant et des informations d'état générées grâce à l'invention en temps réel ou en quasi-temps réel, chaque utilisateur USRi d'un terminal UTi (pour i=1 à 3) peut déterminer s'il souhaite accepter ou non d'être mis en communication avec le terminal tiers CT. Une fois sa décision prise, un utilisateur USRi provoquera l'émission par son terminal UTi d'une notification d'état Ntf(Ti) d'un type particulier, en l'espèce une notification de choix stipulant s'il accepte ou refuse une mise en communication avec le terminal tiers CT. Cette notification sera traitée de la même façon que les notifications d'état déjà évoquées précédemment, et sera répercutée de façon similaire aux autres terminaux UTj (pour i ≠ j) au moyen de notifications de statut Stat(Tj) adaptées. Dans certains modes de mise en oeuvre, le terminal UTi pourra lui-même être destinataire d'une notification de statut le concernant, de sorte que ce terminal traitera son propre statut comme celui des autres terminaux et en produira les informations correspondantes à son propre utilisateur. Ainsi, il ne sera pas nécessaire de prévoir au sein d'un terminal donné un circuit particulier pour le traitement des informations d'état relatives à ce seul terminal donné, toutes les informations d'état relatives à tous les terminaux associés à un même identifiant de groupe étant alors traitées de la même façon au moyen d'un unique processus de traitement.

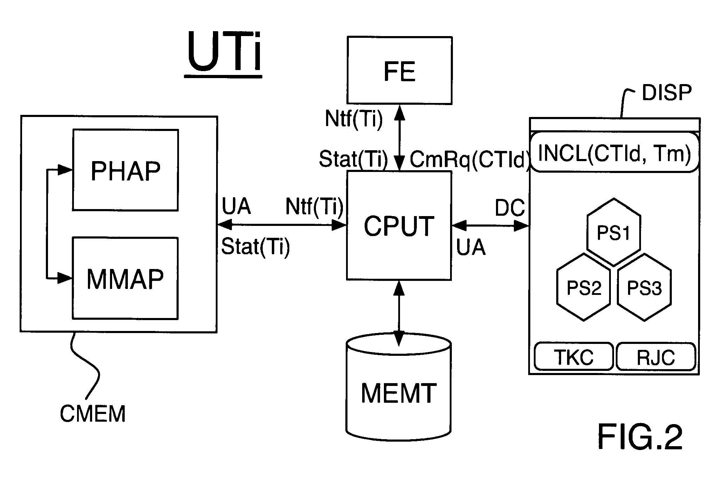

La FIG.2 illustre un mode de réalisation particulier d'un terminal UTi conforme à la description qui précède.

Ce terminal UTi inclut une unité centrale CPUT, par exemple à base de microprocesseur, connectée à une mémoire de masse MEMT et à une mémoire cache CMEM dans laquelle ont été mémorisées deux applications initialement stockées dans la mémoire de masse MEMT. L'unité centrale CPUT est en outre reliée à un écran DISP qui a vocation à afficher en temps réel ou en quasi-temps réel des informations d'état et de choix propres à chaque membre du groupe auquel appartient l'utilisateur du terminal UTi.

Dans le mode de mise en oeuvre décrit ici, une première application PHAP, dite téléphonique, a vocation à gérer les communications téléphoniques du terminal UTi avec le reste du système de télécommunication décrit plus haut, tandis qu'une deuxième application MMAP, dite multimédia, à vocation à gérer les informations d'état propres au terminal UTi ainsi que celles propres aux autres terminaux associés à l'identifiant de groupe auquel est associé le terminal UTi. L'application téléphonique PHAP et l'application multimédia MMAP ont vocation à échanger des informations l'une avec l'autre. En particulier, lorsque le terminal UTi entrera en communication avec un autre terminal, l'application téléphonique PHAP en fera état à l'application multimédia MMAP qui génèrera une notification d'état Ntf(Ti) correspondante, laquelle sera émise à destination du serveur de gestion par des moyens d'émission/réception FE sur ordre de l'unité unité centrale CPUT.

Dans d'autres modes de réalisation, l'application de téléphonie PHAP et l'application multimédia MMAP pourront être intégrées en une seule application. Par exemple lorsque les communications téléphoniques seront assurées en VoIP (abréviation de l'expression anglaise « Voice over IP » bien connue de l'homme du métier), les signaux de parole seront encodés en trames de paquets aux fins d'être transportés vers leur destinataire *via* un réseau de transfert de données, auquel cas la gestion des communications téléphoniques au sein du terminal UTi sera assurée par une application du même type que l'application multimédia MMAP de sorte que ces applications pourront aisément être fusionnées.

A l'inverse, toute notification de statut Stat(Ti) reçue par les moyens d'émission/réception FE du terminal UTi sera transmise par l'unité centrale CPUT à l'application multimédia MMAP qui génèrera un signal de commande DC ordonnant à l'écran DISP de modifier l'image qu'il affiche pour rendre compte des nouvelles informations d'état incluses dans cette notification de statut Stat(Ti), mettant ainsi à jour le contenu d'icônes PS1, PS2 et PS3 représentant le statut des terminaux associés à l'identifiant de groupe auquel est associé le terminal UTi.

Ainsi qu'exposé précédemment, lorsqu'une requête de mise en communication est émise à destination de l'identifiant de groupe auquel le terminal UTi est associé, un signal de présentation d'appel CmRq(CTId) indiquant l'identifiant CTId de l'appelant est transmis au terminal UTi. Cette requête est transmise à l'unité centrale CPUT *via* les moyens d'émission/réception FE, et l'unité centrale CPUT génère alors des signaux de commande d'affichage DC afin que l'écran affiche une image INCL(CTId, Tm) destinée à signaler à l'utilisateur du terminal UTi qu'une requête de mise en communication émanant d'un appelant dont l'identifiant est CLTId a été reçue par le terminal UTi. Optionnellement, l'image INCL(CTId, Tm) pourra contenir l'indication d'une durée Tm à l'issue de laquelle la communication entrante sera transférée à un service de messagerie. Les signaux de commande DC émis par l'unité centrale CPUT intiment en outre à l'écran DISP d'afficher deux icônes TKC et RJC, destinées à permettre à l'utilisateur du terminal UTi de manifester son choix d'accepter ou de refuser la communication présentée dans l'image définie par le signal INCL(CTId, Tm), par exemple au moyen d'une pression du doigt si l'écran est tactile ou encore au moyen d'un stylet ou d'un curseur dans d'autres modes de réalisation de l'écran DISP.

Après action de l'utilisateur sur l'une ou l'autre des icônes TKC et RJC, un signal d'action UA correspondant sera transmis *via* l'unité centrale CPUT à l'application de téléphonie PHAP et à l'application multimédia MMAP. Si l'icône TKC a été sélectionnée, l'application de téléphonie PHAP enclenchera le processus de prise d'appel et signifiera à l'application multimédia qu'une notification signalant qu'une notification de choix signalant l'acceptation de la communication doit être émise vers le serveur de gestion. Si c'est au contraire l'icône TKC qui a été sélectionnée, l'application de téléphonie ne sera pas sollicitée et l'application multimédia émettra vers le serveur de gestion une notification de choix signalant le refus de la communication.

Optionnellement, l'écran DISP pourra être muni de moyens de détection d'une désignation, par un utilisateur du terminal UTi, d'un autre utilisateur correspondant à l'une des icônes PS1, PS2 et PS3, une telle détection pouvant être exécutée par exemple au moyen d'une pression du doigt si l'écran est tactile ou encore au moyen d'un stylet ou d'un curseur dans d'autres modes de réalisation de l'écran DISP.

Une telle désignation déclenchera la génération d'un signal d'action UA provoquant la génération par l'application multimédia MMAP d'une notification de choix qui inclura alors une commande destinée à provoquer la production, par le terminal de l'utilisateur désigné, d'un stimulus prédéterminé lorsque ladite notification sera reçue par ce terminal, soit par voie directe, soit après avoir été répercutée à ce terminal par le serveur de gestion. Ce stimulus prédéterminé pourra par exemple être une vibration signifiant à l'utilisateur désigné qu'il devrait accepter la communication en cours de présentation.

## Revendications

1. Procédé de transmission d'informations entre au moins un premier et un deuxième terminal UT1 et UT2 parmi une pluralité de terminaux UTi, pour i=1 à 3, associés à un identifiant commun, comportant des étapes de :
- émission par au moins ledit premier terminal UT1, d'une notification d'état Ntf(T1) destinée à au moins ledit deuxième terminal UT2 et porteuse d'une information relative au contexte dans lequel se trouve un utilisateur USR1 du premier terminal UT1 ;
- lors de la réception d'une requête de mise en communication CmRq(Idg) destinée audit identifiant commun, présentation de ladite requête à ladite pluralité de terminaux UTi, pour i=1 à 3, et émission par au moins ledit premier terminal UT1 d'une notification de choix destinée à au moins ledit deuxième terminal UT2, ladite notification de choix étant porteuse d'une information relative à la requête de mise en communication présentée,
procédé **caractérisé en ce que** ladite notification de choix peut en outre inclure une commande destinée à produire, dans au moins un terminal UTj de la pluralité de terminaux, pour j=2 ou 3, un stimulus prédéterminé indicatif d'une désignation, par un utilisateur USR1 du premier terminal UT1, d'un utilisateur dudit terminal UTj.

2. Procédé selon la revendication 1, **caractérisé en ce qu'**il inclut en outre une étape de réception de ladite notification par un serveur de gestion, et une étape de retransmission de ladite notification vers au moins le deuxième terminal.

3. Procédé selon l'une des revendications 1 ou 2, **caractérisé en ce que** l'étape de présentation de la communication inclut une présentation d'une durée à l'issue de laquelle ladite communication sera transférée à un service de messagerie.

4. Système de télécommunication incluant une pluralité de terminaux UTi, pour i=1 à 3, associés à un identifiant commun, système dans lequel au moins un premier terminal UT1 inclut des moyens d'émission d'une notification d'état Ntf(T1) destinée à au moins un deuxième terminal UT2 et porteuse d'une information relative au contexte dans lequel se trouve un utilisateur du premier terminal, système dans lequel au moins ledit premier terminal UT1 inclut des moyens d'émission d'une notification de choix destinée à au moins ledit deuxième terminal, ladite notification de choix étant porteuse d'une information relative à une requête de mise en communication destinée audit identifiant commun et présentée à ladite pluralité de terminaux, système **caractérisé en ce que** ladite notification de choix peut en outre inclure une commande destinée à produire, dans au moins un terminal de la pluralité de terminaux, un stimulus prédéterminé indicatif d'une désignation, par un utilisateur du premier terminal, d'un utilisateur dudit terminal.

5. Terminal de communication UT1 associé à un identifiant commun à une pluralité de terminaux UTi, pour i=1 à 3, incluant :
des moyens d'émission d'une notification d'état Ntf(T1) destinée à au moins un deuxième terminal UT2 de la pluralité de terminaux et porteuse d'une information relative au contexte dans lequel se trouve un utilisateur dudit terminal de communication UT1, et
des moyens d'émission d'une notification de choix destinée à au moins un deuxième terminal UT2, ladite notification de choix étant porteuse d'une information relative à une requête de mise en communication destinée audit identifiant commun et présentée à ladite pluralité de terminaux, terminal **caractérisé en ce que** la notification de choix peut en outre inclure une commande destinée à produire, dans au moins un deuxième terminal, un stimulus prédéterminé indicatif d'une désignation, par un utilisateur dudit terminal de communication, d'un utilisateur de ce deuxième terminal.

6. Programme d'ordinateur **caractérisé en ce qu'**il comprend des instructions de code de programme pour la mise en oeuvre d'un procédé selon l'une quelconque des revendications 1 à 3, lorsque ce programme est exécuté par un processeur.

## Patentansprüche

1. Verfahren zum Übertragen von Informationen zwischen wenigstens einem ersten und einem zweiten Endgerät UT1 bzw. UT2 unter mehreren Endgeräten UTi, für i = 1 bis 3, die einer gemeinsamen Kennung zugeordnet sind, das die folgenden Schritte umfasst:
- Senden wenigstens durch das erste Endgerät UT1 einer Zustandsmeldung Ntf(T1), die wenigstens für das zweite Endgerät UT2 bestimmt ist und Träger von Informationen bezüglich des Kontexts ist, in dem sich ein Anwender USR1 des ersten Endgeräts UT1 befindet;
- bei Empfang einer Kommunikationsaufbauanforderung CmRq(Idg), die für die gemeinsame Kennung bestimmt ist, Darstellen der Anforderung für die mehreren Endgeräte UTi, für i = 1 bis 3, und Senden wenigstens durch das erste Endgerät UT1 einer Wahlmeldung, die wenigstens für das zweite Endgerät UT2 bestimmt ist, wobei die Wahlmeldung Träger von Informationen ist, die auf die dargestellte Kommunikationsaufbauaufforderung bezogen sind,
wobei das Verfahren **dadurch gekennzeichnet ist, dass** die Wahlmeldung außerdem einen Befehl enthalten kann, der dazu bestimmt ist, in wenigstens einem Endgerät UTj der mehreren Endgeräte, für j = 2 oder 3, einen vorgegebenen Stimulus einer Bezeichnung eines Anwenders des Endgeräts UTj durch einen Anwender USR1 des ersten Endgeräts UT1 zu erzeugen.

2. Verfahren nach Anspruch 1, **dadurch gekennzeichnet, dass** es außerdem einen Schritt des Empfangens der Meldung durch einen Steuerungsserver und einen Schritt des erneuten Sendens der Meldung wenigstens zu dem zweiten Endgerät umfasst.

3. Verfahren nach einem der Ansprüche 1 oder 2, **dadurch gekennzeichnet, dass** der Schritt des Darstellens der Kommunikation eine Darstellung einer Dauer enthält, an deren Beginn die Kommunikation an einen Nachrichtendienst übertragen wird.

4. Telekommunikationssystem, das mehrere Endgeräte UTi, für i = 1 bis 3, die einer gemeinsamen Kennung zugeordnet sind, umfasst, wobei in dem System wenigstens ein erstes Endgerät UT1 Mittel zum Senden einer Zustandsmeldung Ntf(T1), die wenigstens für ein zweites Endgerät UT2 bestimmt ist und Träger von Informationen bezüglich des Kontexts ist, in dem sich ein Anwender des ersten Endgeräts befindet, enthält, wobei in dem System wenigstens das erste Endgerät UT1 Mittel zum Senden einer Wahlmeldung enthält, die wenigstens für das zweite Endgerät bestimmt ist, wobei die Wahlmeldung Träger von Informationen bezüglich einer Kommunikationsaufbauanforderung ist, die für die gemeinsame Kennung bestimmt ist und für die mehreren Endgeräte dargestellt wird,
wobei das System **dadurch gekennzeichnet ist, dass** die Wahlmeldung außerdem einen Befehl enthalten kann, der dazu bestimmt ist, in wenigstens einem Endgerät der mehreren Endgeräte einen vorgegebenen Stimulus, der eine Bezeichnung eines Anwenders des Endgeräts angibt, durch einen Anwender des ersten Endgeräts zu erzeugen.

5. Kommunikationsendgerät UT1, das einer Kennung zugeordnet ist, die mehreren Endgeräten UTi, für i = 1 bis 3, gemeinsam ist, das Folgendes umfasst:
Mittel zum Senden einer Zustandsmeldung Ntf (T1), die wenigstens für ein zweites Endgerät UT2 der mehreren Endgeräte bestimmt ist und Träger von Informationen bezüglich des Kontexts ist, in dem sich ein Anwender des Kommunikationsendgeräts UT1 befindet, und
Mittel zum Senden einer Wahlmeldung, die wenigstens für ein zweites Endgerät UT2 bestimmt ist, wobei die Wahlmeldung Träger von Informationen bezüglich einer Kommunikationsaufbauanforderung ist, die für die gemeinsame Kennung bestimmt ist und für die mehreren Endgeräte dargestellt wird,
wobei das Endgerät **dadurch gekennzeichnet ist, dass** die Wahlmeldung außerdem einen Befehl enthalten kann, der dazu bestimmt ist, in wenigstens einem zweiten Endgerät einen vorgegebenen Stimulus, der eine Bezeichnung eines Anwenders dieses zweiten Endgeräts angibt, durch einen Anwender des Kommunikationsendgeräts zu erzeugen.

6. Computerprogramm, **dadurch gekennzeichnet, dass** es Programmcodebefehle für die Ausführung eines Verfahrens nach einem der Ansprüche 1 bis 3, wenn dieses Programm durch einen Prozessor ausgeführt wird, umfasst.

## Claims

1. Method for transmitting information between at least one first and one second terminal UT1 and UT2 from among a plurality of terminals UTi, for i = 1 to 3, associated with a common identifier, comprising steps of:
- sending by at least said first terminal UT1, of a state notification Ntf (T1) intended for at least said second terminal UT2 and carrying an item of information relating to the context in which a user USR1 of the first terminal UT1 finds himself;
- upon reception of a communication instigation request CmRq(Idg) intended for said common identifier, presentation of said request to said plurality of terminals UTi, for i = 1 to 3, and sending by at least said first terminal UT1 of a notification of choice intended for at least said second terminal UT2, said notification of choice carrying an item of information relating to the communication instigation request presented,
method **characterized in that** said notification of choice can furthermore include a command intended to produce, in at least one terminal UTj of the plurality of terminals, for j = 2 or 3, a predetermined stimulus indicative of a designation, by a user USR1 of the first terminal UT1, of a user of said terminal UTj.

2. Method according to Claim 1, **characterized in that** it furthermore includes a step of reception of said notification by a management server, and a step of retransmitting said notification to at least the second terminal.

3. Method according to one of Claims 1 or 2, **characterized in that** the step of presenting the communication includes a presentation of a duration on completion of which said communication will be transferred to a messaging service.

4. Telecommunication system including a plurality of terminals UTi, for i = 1 to 3, associated with a common identifier, in which system at least one first terminal UT1 includes means for sending a state notification Ntf (T1) intended for at least one second terminal UT2 and carrying an item of information relating to the context in which a user of the first terminal finds himself, in which system at least said first terminal UT1 includes means for sending a notification of choice intended for at least said second terminal, said notification of choice carrying an item of information relating to a communication instigation request intended for said common identifier and presented to said plurality of terminals,
system **characterized in that** said notification of choice can furthermore include a command intended to produce, in at least one terminal of the plurality of terminals, a predetermined stimulus indicative of a designation, by a user of the first terminal, of a user of said terminal.

5. Communication terminal UT1 associated with an identifier common to a plurality of terminals UTi, for i = 1 to 3, including:
- means for sending a state notification Ntf (T1) intended for at least one second terminal UT2 of the plurality of terminals and carrying an item of information relating to the context in which a user of said communication terminal UT1 finds himself, and
- means for sending a notification of choice intended for at least one second terminal UT2, said notification of choice carrying an item of information relating to a communication instigation request intended for said common identifier and presented to said plurality of terminals,
terminal **characterized in that** the notification of choice can furthermore include a command intended to produce, in at least one second terminal, a predetermined stimulus indicative of a designation, by a user of said communication terminal, of a user of this second terminal.

6. Computer program **characterized in that** it comprises program code instructions for the implementation of a method according to any one of Claims 1 to 3, when this program is executed by a processor.
